# EUROPEAN PATENT APPLICATION

(11) **EP 4 817 931 A1**
(43) Date of publication of application: **07.10.2026**
(21) Application number: 24897391.9
(22) Date of filing: 19.11.2024
(51) Int. Cl.: B60L 7/12, B60L 1/00, B60L 58/12, B66C 13/52, B66C 23/36

(54) **CRANE**

(30) Priority: 01.12.2023 JP 2023203954
(71) Applicant: TADANO LTD., Takamatsu-shi, Kagawa 761-0185 (JP)
(72) Inventor: KAWANO, Takashi, Takamatsu-shi, Kagawa 761-0185 (JP); TERATA, Kimihiko, Takamatsu-shi, Kagawa 761-0185 (JP)
(74) Representative: MFG Patentanwälte Meyer-Wildhagen Meggle-Freund Gerhard PartG mbB
(86) International application number: PCT/JP2024/041021
(87) International publication number: WO 2025/115705

(57) **Abstract**

In the present invention, a crane comprises a traveling vehicle body having a travel motor driven by a power supply unit, a hydraulic oil supply device that is driven by the power supply unit and that supplies hydraulic oil to a driven unit, and a regenerative brake device that performs regenerative brake control for supplying regenerative power generated by the travel motor to the power supply unit to generate braking force during deceleration of the traveling vehicle body. Under regenerative brake control, the regenerative brake device distributes the regenerative power to the hydraulic oil supply device in accordance with the chargeable power of the power supply unit, and changes the electric power consumed by the hydraulic oil supply device.

## Description

### Technical Field

The present invention relates to a crane.

### Background Art

Patent Literature 1 discloses a mobile crane including a lower traveling body having a traveling function and an upper turning body provided in a turnable state in an upper portion of the lower traveling body. The lower traveling body includes an engine and travels on the basis of the power of the engine.

### Citation List

### Patent Literature

Patent Literature 1: JP 2012-96928 A

### Summary of the Invention

### Problems to be Solved by the Invention

In recent years, there has been a demand for motorized cranes as described above from the viewpoint of environmental protection and the like.

An object of the present invention is to provide a crane that can travel by electric power.

### Solutions to Problems

One aspect of a crane according to the present invention includes:
a traveling vehicle body including a travel motor driven by a power supply unit;
a hydraulic oil supply device that is driven by the power supply unit and supplies hydraulic oil to a driven unit; and
a regenerative brake device that performs regenerative brake control of supplying regenerative power generated by the travel motor to the power supply unit to generate a braking force when the traveling vehicle body decelerates, in which
the regenerative brake device distributes the regenerative power to the hydraulic oil supply device and changes electric power to be consumed by the hydraulic oil supply device according to chargeable power of the power supply unit in the regenerative brake control.

### Effects of the Invention

According to the present invention, it is possible to provide the crane that can travel by electric power.

### Brief Description of Drawings

Fig. 1 is a schematic view of a mobile crane according to a first embodiment.
Fig. 2 is a block diagram schematically illustrating a system configuration of the mobile crane.
Fig. 3 is a perspective view of a crane from which part of a configuration is omitted.
Fig. 4 is a diagram for describing an arrangement of a transmission member, a tank, and a hydraulic oil supply device.
Fig. 5 is a flowchart of a regenerative power compensation control.

### Description of Embodiments

Hereinafter, an example of embodiments of a crane according to the present invention will be described in detail on the basis of the drawings. Note that a crane according to an embodiment described below is an example of the crane according to the present invention, and the present invention is not limited to the embodiment described below.

### [Embodiment]

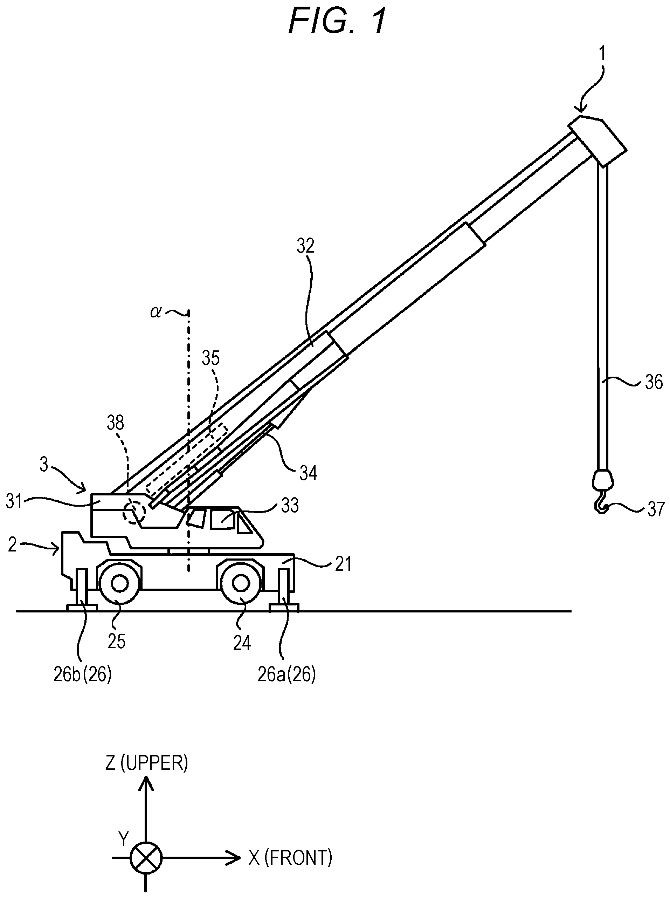

A mobile crane 1 according to the present embodiment will be described with reference to Figs. 1 to 5. Fig. 1 is a schematic view of a mobile crane 1 (in the illustrated case, a rough terrain crane) according to the present embodiment. The mobile crane is, for example, an all-terrain crane, a truck crane, or a loading truck crane (also referred to as a cargo crane). However, the crane according to the present invention may be various cranes.

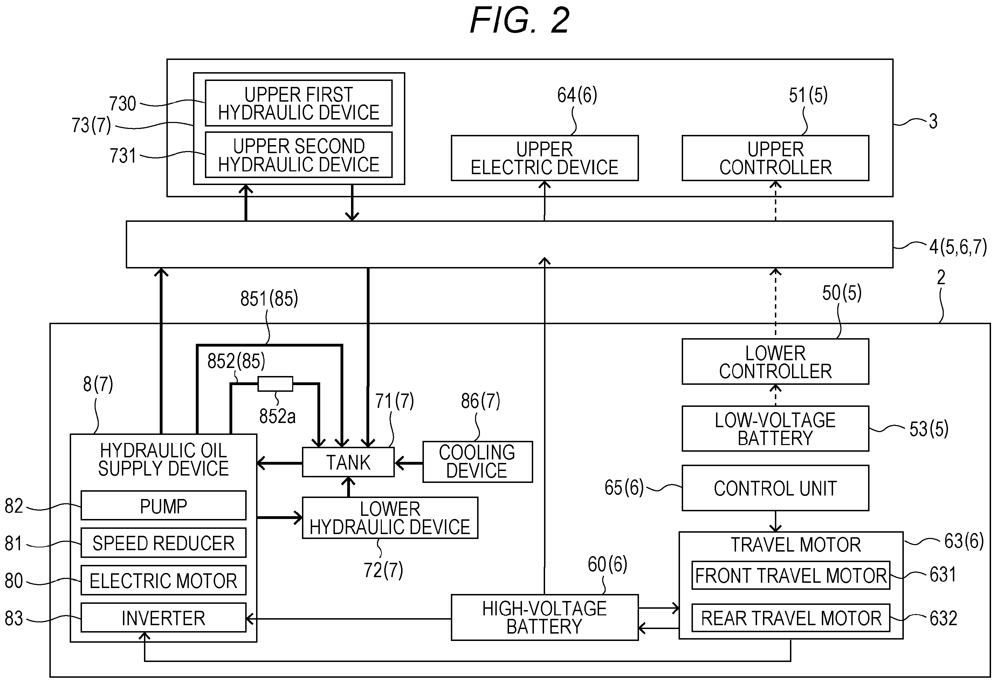

The mobile crane 1 includes a lower traveling body 2 and an upper turning body 3. The mobile crane 1 is an electric crane including a high-voltage battery 60 (see Fig. 2). The mobile crane 1 travels only by using electric power supplied from the high-voltage battery 60 as power. That is, the mobile crane 1 does not include an engine.

Further, the mobile crane 1 executes an operation other than traveling (for example, crane operations, cooling, and/or heating) on the basis of the electric power supplied from the high-voltage battery 60. The crane operation is, for example, a turning operation and/or a winch operation in a cargo conveyance operation.

When decelerating in the traveling state, such a mobile crane 1 performs regenerative brake control of supplying regenerative power generated by the travel motor 63 to the high-voltage battery 60 to generate braking force.

In the regenerative brake control, the mobile crane 1 distributes the regenerative power to the hydraulic oil supply device 8 when the remaining battery level of the high-voltage battery 60 is larger than a predetermined value. At this time, the mobile crane 1 changes the electric power consumed by the hydraulic oil supply device 8 according to the remaining battery level. Hereinafter, a specific configuration of the mobile crane 1 will be described. Thereafter, regenerative brake control performed in the mobile crane 1 will be described.

First, the configuration of the upper turning body 3 will be described with reference to Fig. 1. Fig. 1 is a schematic view of the mobile crane 1. The upper turning body 3 is provided on an upper portion of the lower traveling body 2, and turns about a turning center axis α with respect to the lower traveling body 2. The upper turning body 3 includes a turning base 31, a telescopic boom 32, and a cab 33.

The turning base 31 is supported on the upper portion of the lower traveling body 2 via a bearing (not illustrated). The turning base 31 turns on the basis of power generated by a turning actuator (not illustrated) provided in the upper turning body 3.

In the present embodiment, the turning actuator is a hydraulic motor. The motor operates on the basis of supply and discharge of hydraulic oil. The hydraulic oil is supplied from the lower traveling body 2. Note that the turning actuator may be an electric motor. In this case, the electric motor for turning is driven on the basis of the electric power supplied from the high-voltage battery 60 described below.

The telescopic boom 32 is supported by the turning base 31 and has a plurality of telescopically combined booms. The telescopic boom 32 can vary in derricking angle on the basis of power generated by a derricking cylinder 34.

The derricking cylinder 34 is a telescopic hydraulic cylinder and is provided in the upper turning body 3. The derricking cylinder 34 operates on the basis of supply and discharge of hydraulic oil. The hydraulic oil is supplied by a hydraulic oil supply device 8 (see Fig. 2) provided in the lower traveling body 2.

The telescopic boom 32 expands and contracts on the basis of the power generated by a telescopic cylinder 35. The telescopic cylinder 35 is a hydraulic cylinder and is provided inside the telescopic boom 32. The telescopic cylinder 35 operates on the basis of supply and discharge of hydraulic oil. The hydraulic oil is supplied by a hydraulic oil supply device 8 (see Fig. 2) provided in the lower traveling body 2.

Further, the telescopic boom 32 supports a wire rope 36. The wire rope 36 hangs down from a distal end of the telescopic boom 32, and a hook 37 is provided at a distal end. Part of the wire rope 36 is wound around a winch 38.

The winch 38 is driven on the basis of the power generated by a winch actuator (not illustrated). In the present embodiment, the winch actuator is provided on the turning base 31 and is a hydraulic motor. The motor operates on the basis of supply and discharge of hydraulic oil. The hydraulic oil is supplied by a hydraulic oil supply device 8 (see Fig. 2) provided in the lower traveling body 2.

When the winch 38 rotates, the wire rope 36 is wound up or unwound according to the rotation direction of the winch 38. Note that a motor for winching may be an electric motor. In this case, the electric motor for winching is driven on the basis of the electric power supplied from the high-voltage battery 60 described below.

Next, the lower traveling body 2 will be described with reference to Figs. 1 to 4. Note that an orthogonal coordinate system (X, Y, Z) illustrated in each drawing is used in describing a structure of the lower traveling body 2. The X direction coincides with the front-rear direction of the lower traveling body 2. The positive side in the X direction coincides with the front side of the lower traveling body 2. The negative side in the X direction coincides with the rear side of the lower traveling body 2. The Y direction coincides with the left-right direction of the lower traveling body 2. The positive side in the Y direction coincides with the left side when the lower traveling body 2 is viewed from the rear. The negative side in the Y direction coincides with the right side when the lower traveling body 2 is viewed from the rear. The Z direction coincides with the up-down direction of the lower traveling body 2. The positive side in the Z direction coincides with the upper side of the lower traveling body 2. The negative side in the Z direction coincides with the lower side of the lower traveling body 2.

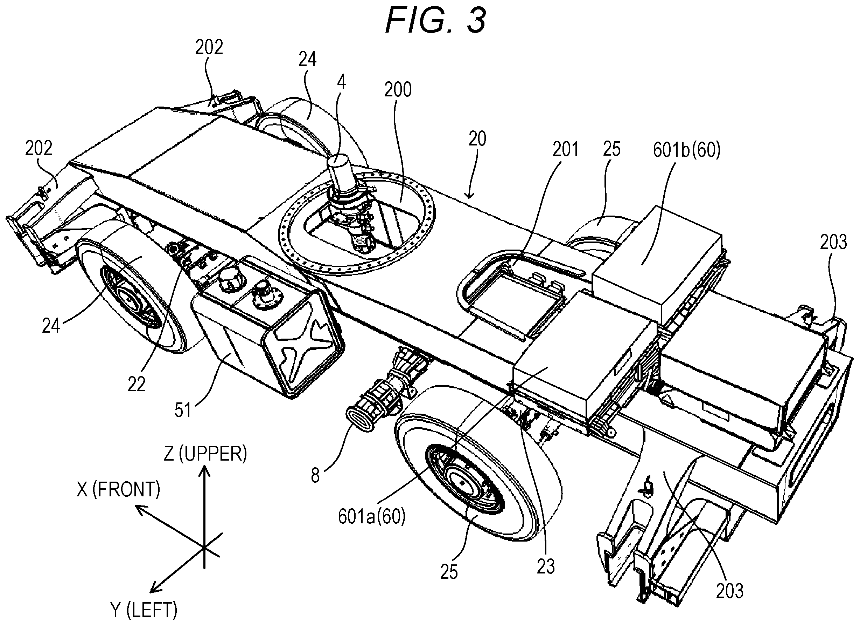

The lower traveling body 2 corresponds to an example of a traveling vehicle body, and can travel by electric power. Specifically, as illustrated in Figs. 1 and 3, the lower traveling body 2 includes a frame 20, a body 21, a front axle 22, a rear axle 23, front tires 24, rear tires 25, and an outrigger 26.

The frame 20 is a box-shaped member extending in the front-rear direction and having a rectangular sectional shape, for example, and constitutes a framework of the lower traveling body 2.

The frame 20 has a transmission member arrangement space 200 configured by a through hole penetrating the frame 20 in the up-down direction. The transmission member arrangement space 200 is provided in an intermediate portion of the frame 20 in the front-rear direction.

Further, the frame 20 has a battery housing space 201 formed by a through hole penetrating the frame 20 in the up-down direction. The battery housing space 201 is provided in the frame 20 at a position extending from the upper side of the rear axle 23 to a rear end.

That is, the battery housing space 201 is provided in the rear portion of the frame 20. The position of the battery housing space is not limited to the illustrated case. The battery housing space may be provided in the frame 20 at a position extending from the upper side of the front axle 22 to a front end. In this case as well, the battery housing space may be formed by a through hole penetrating the frame 20 in the up-down direction.

The frame 20 has a pair of front outrigger supports 202 at a front end. The frame 20 has a pair of rear outrigger supports 203 at a rear end.

The body 21 (see Fig. 1) is a member constituting the outer shape of the lower traveling body 2, and is supported by the frame 20.

The front axle 22 is a shaft member extending in the left-right direction, and is supported by a portion near the front end of the frame 20. The front tires 24 are rotatably supported one-to-one at both ends of the front axle 22 in the left-right direction.

The rear axle 23 is a shaft member extending in the left-right direction, and is supported by a portion near the rear end of the frame 20. The rear tires 25 are rotatably supported one-to-one at both ends of the rear axle 23 in the left-right direction.

In the present embodiment, the mobile crane 1 is a so-called biaxial mobile crane including the front axle 22 and the rear axle 23. Note that a so-called multi-axle mobile crane including three or more axles may be provided as a mobile crane.

The outrigger 26 includes a pair of the front outriggers 26a and a pair of the rear outriggers 26b. The pair of front outriggers 26a is supported one-to-one by the pair of front outrigger supports 202 of the frame 20. Further, the pair of rear outriggers 26b are supported one-to-one by the pair of rear outrigger supports 203 in the frame 20.

Further, the mobile crane 1 includes a transmission member 4 provided between the lower traveling body 2 and the upper turning body 3. Specifically, the transmission member 4 is disposed in the transmission member arrangement space 200 of the frame 20. Further, such a transmission member 4 is a member for transmitting electric power, fluid (hydraulic oil and/or compressed air), signals, and the like between the lower traveling body 2 and the upper turning body 3 which rotate relatively.

As illustrated in Fig. 2, the mobile crane 1 includes a low-voltage system 5, a high-voltage system 6, and a hydraulic system 7. Hereinafter, configurations of the low-voltage system 5, the high-voltage system 6, and the hydraulic system 7 will be described.

First, the low-voltage system 5 will be described. The low-voltage system 5 includes a lower controller 50, a transmission member 4, an upper controller 51, and a low-voltage battery 53.

The lower controller 50 transmits, for example, a video signal, a detection signal of a sensor, and a control signal to the upper controller 51 via the transmission member 4. The control signal is a signal for controlling the operation of the device provided in the upper turning body 3 to be controlled. The lower controller 50 operates on the basis of electric power supplied from the low-voltage battery 53.

The upper controller 51 transmits a signal received from the lower controller 50 to a control device that controls the operation of a device provided in the upper turning body 3. The control device includes, for example, an electromagnetic valve that controls the operation of an upper hydraulic device 73 and a controller that controls the operation of an upper electric device 64.

In addition to the signal, the low-voltage system 5 may transmit, for example, information about the operation of a device provided in the upper turning body 3 and/or a current equal to or less than a predetermined voltage to be supplied to the device from the lower traveling body 2 to the upper turning body 3.

Next, the high-voltage system 6 will be described. The high-voltage system 6 is a system for executing traveling of the lower traveling body 2 and operations other than traveling (for example, crane operations, cooling, and/or heating) on the basis of the electric power supplied from the high-voltage battery 60.

As illustrated in Fig. 2, the high-voltage system 6 includes a high-voltage battery 60, a travel motor 63, a transmission member 4, an upper electric device 64, and a control unit 65.

The high-voltage battery 60 corresponds to an example of a power supply unit, and includes a plurality of batteries 601a and 601b as illustrated in Fig. 3. The batteries 601a and 601b are disposed outside the frame 20 (specifically, the upper side). Further, the high-voltage battery 60 has a plurality of batteries (not illustrated) disposed in the battery housing space 201 of the frame 20.

The travel motor 63 includes a front travel motor 631 and a rear travel motor 632. The front travel motor 631 and the rear travel motor 632 are provided below the frame 20 and between the front axle 22 and the rear axle 23.

The front travel motor 631 is connected to the front axle 22. The front travel motor 631 drives the front axle 22 on the basis of electric power supplied from the high-voltage battery 60.

The rear travel motor 632 is connected to the rear axle 23. The rear travel motor 632 drives the rear axle 23 on the basis of the electric power supplied from the high-voltage battery 60.

The travel motor 63 (specifically, the front travel motor 631 and the rear travel motor 632) as described above is driven under the control of the control unit 65 on the basis of electric power supplied from the high-voltage battery 60. When the travel motor 63 is driven, the lower traveling body 2 (mobile crane 1) can travel on the basis of the power of the travel motor 63. The electric power of the high-voltage battery 60 is transmitted to the upper turning body 3 via the transmission member 4.

The transmission member 4 constitutes an electric path of the electric power supplied from the high-voltage battery 60 to the upper electric device 64 between the lower traveling body 2 and upper turning body 3 which rotate relatively. The upper electric device 64 is a device that is provided in the upper turning body 3 and operates on the basis of the electric power of the high-voltage battery 60. The upper electric device 64 is, for example, a heating compressor provided in the upper turning body 3.

When the turning actuator is an electric motor, the turning electric motor corresponds to an example of the upper electric device. When the winch actuator is an electric motor, the electric motor for winching corresponds to an example of the upper electric device. In this case, the transmission member 4 is connected to the electric motor for turning and the electric motor for winching via an upper junction box (not illustrated). Such an upper junction box has a function of allocating the electric power of the high-voltage battery 60 supplied via the transmission member 4 to the electric motor for turning and the electric motor for winching.

When the electrical power of the high-voltage battery 60 is supplied, the electric motor for turning is driven on the basis of the electrical power. Then, the electric motor for turning turns the upper turning body 3. In addition, when the electrical power of the high-voltage battery 60 is supplied, the electric motor for winching is driven on the basis of the electrical power. Then, the electric motor for winching rotates the winch (not illustrated). As a result, the wire rope 36 is wound up or unwound, and the hook 37 ascends or descends.

Next, the hydraulic system 7 will be described. The hydraulic system 7 is a system for supplying hydraulic oil to a lower hydraulic device 72 provided in the lower traveling body 2 and an upper hydraulic device 73 provided in the upper turning body 3.

The lower hydraulic device 72 includes, for example, a hydraulic cylinder constituting a suspension and/or a hydraulic cylinder constituting an outrigger. In addition, the lower hydraulic device 72 may include a hydraulic cylinder constituting a steering device.

The upper hydraulic device 73 includes the turning actuator (not illustrated), the derricking cylinder 34, the telescopic cylinder 35, and the winch actuator (not illustrated). The upper hydraulic device 73 may include an actuator for moving the jib.

The hydraulic system 7 includes a tank 71, the hydraulic oil supply device 8, and the transmission member 4. The hydraulic system 7 also includes the lower hydraulic device 72 and the upper hydraulic device 73. The constituent elements in the hydraulic system 7 are connected through a circuit indicated with bold lines in Fig. 2.

The tank 71 and the hydraulic oil supply device 8 are provided in the lower traveling body 2. Specifically, as illustrated in Fig. 3, the tank 71 and the hydraulic oil supply device 8 are disposed in a predetermined region between the front axle 22 and the rear axle 23 and on a side (left side in the present embodiment) of the frame 20 in the left-right direction.

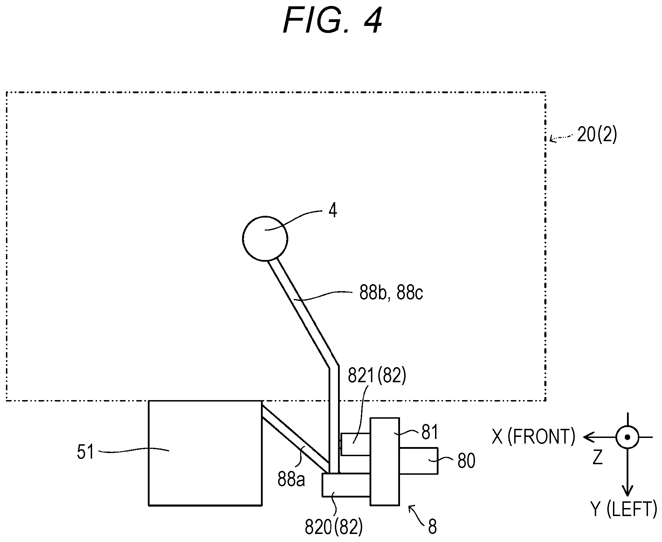

The tank 71 corresponds to an example of a hydraulic oil tank, is a tank for storing hydraulic oil, and has a substantially rectangular parallelepiped box shape. As shown in Fig. 4, the tank 71 is disposed on a side (left side in the present embodiment) of the transmission member 4.

The tank 71 and the hydraulic oil supply device 8 are disposed side by side in the front-rear direction in the predetermined region. The tank 71 is disposed in front of the hydraulic oil supply device 8. The tank 71 and the hydraulic oil supply device 8 are fixed to a side face (left side face in the present embodiment) of the frame 20.

The hydraulic oil supply device 8 is provided on a side (rear side in the present embodiment) of the tank 71. The hydraulic oil supply device 8 includes an electric motor 80, a speed reducer 81, and a pump 82.

The electric motor 80 corresponds to an example of a pump motor. The speed reducer 81 is provided on one side (front side in the present embodiment) in the axial direction of the electric motor 80. In the present embodiment, the axial direction of the electric motor 80 is a direction parallel to the front-rear direction. The axial direction of the electric motor 80 may be a direction inclined with respect to the front-rear direction in the horizontal plane.

The speed reducer 81 decelerates the rotation of the electric motor 80 and then transmits the rotation to the pump 82. The electric motor 80 is provided opposite the pump 82 (the first pump 820 and the second pump 821) in the front-rear direction with the speed reducer 81 as the center. Specifically, the pump 82 (the first pump 820 and the second pump 821) is provided in front of the speed reducer 81. The electric motor 80 is provided behind the speed reducer 81. The pump 82 corresponds to an example of a first pump unit. The electric motor 80 is driven on the basis of electric power supplied from the high-voltage battery 60 via an inverter 83 (see Fig. 2).

The inverter 83 is provided between the tank 71 and the hydraulic oil supply device 8 in the front-rear direction.

The speed reducer 81 decelerates the rotation of the electric motor 80 at a predetermined speed reduction ratio to transmit the rotation to the pump 82.

The pump 82 corresponds to an example of a pump unit, and operates on the basis of the rotation transmitted from the electric motor 80. The pump 82 includes the first pump 820 (see Fig. 4) and the second pump 821. The first pump 820 and the second pump 821 are disposed in parallel. That is, the center axis of the first pump 820 and the center axis of the second pump 821 are parallel to each other.

The center axes of the first pump 820 and the second pump 821 are parallel to the front-rear direction. The center axes of the first pump 820 and the second pump 821 are parallel to the center axis of the electric motor 80. The center axes of the first pump 820 and the second pump 821 may be in a direction inclined with respect to the front-rear direction in a horizontal plane. Also in this case, the center axes of the first pump 820 and the second pump 821 may be parallel to the center axis of the electric motor 80.

Each of the first pump 820 and the second pump 821 is connected to the tank 71 via a discharge hose 88a. The discharge hose 88a extends from the tank 71 toward the pump 82.

The hydraulic oil flowing out of the tank 71 flows into each of the first pump 820 and the second pump 821 through the discharge hose 88a.

The first pump 820 corresponds to an example of a main pump, and is driven on the basis of the rotation of the electric motor 80 to supply hydraulic oil to the first driven part.

The first pump 820 is a variable displacement pump capable of changing the discharge amount. In the present embodiment, the first pump 820 has, as operation modes, a first mode in which the discharge capacity is a first discharge capacity and a second mode in which the discharge capacity is a second discharge capacity. The discharge capacity of the first pump 820 in the first mode is smaller than the discharge capacity of the first pump 820 in the second mode.

The discharge capacity of the first pump 820 in the first mode is the minimum discharge capacity in the first pump 820. The discharge capacity of the first pump 820 in the second mode is the maximum discharge capacity in the first pump 820.

In the present embodiment, the first driven part is an upper first hydraulic device 730 (see Fig. 2) included in the upper hydraulic device 73.

The upper first hydraulic device 730 is a hydraulic device that is driven at the time of crane operation, and includes a derricking cylinder 34, a telescopic cylinder 35, and a winch actuator (not illustrated). The upper first hydraulic device 730 may include an actuator for moving the jib. The first driven part includes an outrigger hydraulic cylinder included in the lower hydraulic device 72.

When the hydraulic oil is supplied to the upper first hydraulic device 730, the first pump 820 supplies the hydraulic oil to the transmission member 4. In the present embodiment, in the crane operation state, the first pump 820 is constantly driven to supply the hydraulic oil to the upper first hydraulic device 730.

The transmission member 4 constitutes a flow path of a fluid (for example, hydraulic oil and/or compressed air) supplied from the lower traveling body 2 to the upper turning body 3 between the lower traveling body 2 and the upper turning body 3 that relatively rotate.

Specifically, the transmission member 4 constitutes part of a flow path for supplying the hydraulic oil supplied from the hydraulic oil supply device 8 (first pump 820) to the upper hydraulic device 73 provided in the upper turning body 3.

The hydraulic oil used in the upper first hydraulic device 730 passes through the transmission member 4 and returns to the tank 71. The transmission member 4 also constitutes part of a flow path of hydraulic oil returning from the upper turning body 3 to the lower traveling body 2.

The first pump 820 and the transmission member 4 are connected via a discharge hose 88b (see Fig. 4).

When the winch actuator (not illustrated), the derricking cylinder 34, and the telescopic cylinder 35 are provided in mutually independent hydraulic circuits, the first pump 820 may be configured by a plurality of independent pumps corresponding to the respective hydraulic circuits.

The second pump 821 corresponds to an example of a sub pump, and is driven on the basis of the rotation of the electric motor 80 to supply hydraulic oil to the second driven part. In the present embodiment, the second pump 821 is a pump smaller than the first pump 820. In other words, the discharge amount of the second pump 821 is smaller than the discharge amount of the first pump 820.

In the present embodiment, the second driven part is the upper second hydraulic device 731 (see Fig. 2) included in the upper hydraulic device 73. The upper second hydraulic device 731 includes a turning actuator (not illustrated) and an orbital roll (registered trademark) constituting a steering device. The orbital roll is a hydraulic device that is attached to a handle portion of a crane and supplies pressure oil to a hydraulic cylinder provided in the lower traveling body 2.

When the hydraulic oil is supplied to an upper second hydraulic device 731, the second pump 821 supplies the hydraulic oil to the transmission member 4. The transmission member 4 constitutes part of a flow path for supplying the hydraulic oil supplied from the hydraulic oil supply device 8 (second pump 821) to the upper second hydraulic device 731 provided in the upper turning body 3.

The hydraulic oil used in the upper second hydraulic device 731 passes through the transmission member 4 and returns to the tank 71. The transmission member 4 also constitutes a flow path for the hydraulic oil returning from the upper turning body 3 to the lower traveling body 2.

The second pump 821 and the transmission member 4 are connected via a discharge hose 88c (see Fig. 4). In Fig. 4, the discharge hose 88b and the discharge hose 88c are illustrated as one discharge hose for the sake of convenience, but the discharge hose 88b and the discharge hose 88c are independent from each other.

In the present embodiment, the first pump 820 and the second pump 821 operate together. However, the first pump 820 and the second pump 821 may operate independently of each other. That is, the first pump 820 may operate in a situation where the first driven part requires the hydraulic oil, and the first pump 820 may stop in a situation where the first driven part does not require the hydraulic oil. The second pump 821 may operate in a situation where the second driven part requires the hydraulic oil, and the second pump 821 may stop in a situation where the second driven part does not require the hydraulic oil.

Alternatively, in a situation where the first driven part does not require the hydraulic oil, the output of the first pump 820 may be set to a predetermined value or less. Further, in a situation where the second driven part does not require the hydraulic oil, the output of the second pump 821 may be set to a predetermined value or less. With such a configuration, electric power consumption can be suppressed, so that energy saving can be achieved.

Next, regenerative brake control performed in the mobile crane 1 will be described. When decelerating in the traveling state, the mobile crane 1 performs regenerative brake control of supplying regenerative power generated by the travel motor 63 to the high-voltage battery 60 to generate braking force.

Specifically, when the driver returns the accelerator pedal in the traveling state of the mobile crane 1, the rotation of the front tires 24 and the rear tires 25 is transmitted to the travel motor 63, so that regenerative power is generated in the travel motor 63 (specifically, the front travel motor 631 and the rear travel motor 632).

Then, the braking force corresponding to the regenerative power generated by the travel motor 63 (specifically, the front travel motor 631 and the rear travel motor 632) acts on the front tires 24 and the rear tires 25 to decelerate the mobile crane 1.

In the present embodiment, in the regenerative brake control, the regenerative power generated by the travel motor 63 is basically supplied to the high-voltage battery 60. Such control in the regenerative brake control is referred to as normal regenerative brake control.

However, in the regenerative brake control, depending on the remaining battery level of the high-voltage battery 60, the high-voltage battery 60 may not be able to receive all of the regenerative power.

When the high-voltage battery 60 cannot receive the regenerative power and cannot consume the regenerative power generated by the travel motor 63, the braking force may not be obtained to decelerate the mobile crane 1.

Therefore, in the present embodiment, the mobile crane 1 distributes regenerative power to the hydraulic oil supply device 8 when the remaining battery level of the high-voltage battery 60 is larger than a predetermined value in the regenerative brake control. Such control in the regenerative brake control is referred to as regenerative power compensation control.

In the present embodiment, the mobile crane 1 changes the electric power consumed by the hydraulic oil supply device 8 according to the remaining battery level of the high-voltage battery 60 in the regenerative power compensation control.

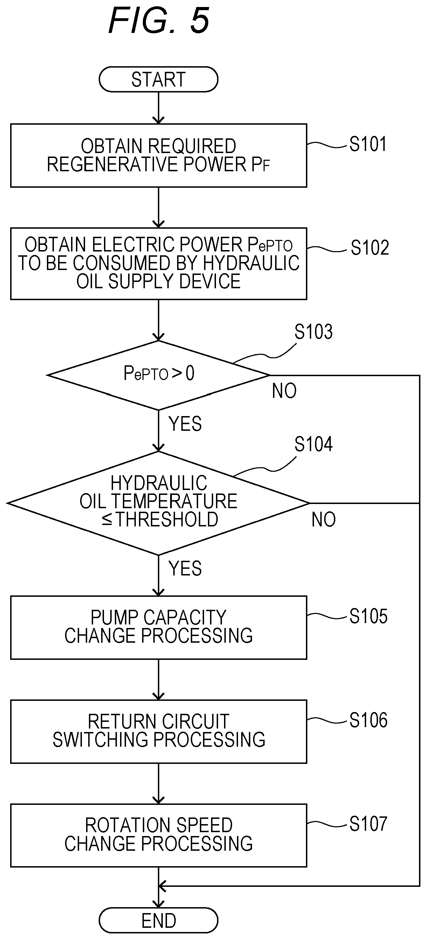

Hereinafter, regenerative power compensation control performed in the regenerative brake control will be described with reference to Fig. 5. Fig. 5 is a flowchart of a regenerative power compensation control. The regenerative brake control and the regenerative power compensation control are performed by the control unit 65. Therefore, the control processing performed in the regenerative brake control and the regenerative power compensation control is mainly performed by the control unit 65.

The control unit 65, the high-voltage battery 60, and the hydraulic oil supply device 8 constitute a regenerative brake device. In the following description, the term "electric power" may be replaced with the term "current".

First, in step S101 of Fig. 5, the control unit 65 obtains the required regenerative power P_{F}. The required regenerative power P_{F} is the sum of the electric power corresponding to the braking force to be applied to the front tire 24 (in other words, the front axle 22) and the power corresponding to the braking force to be applied to the rear tire 25 (in other words, the rear axle 23). The required regenerative power P_{F} is also regenerative power generated by the travel motor 63 in the regenerative brake control.

The electric power corresponding to the braking force to be applied to the front tire 24 is electric power (hereinafter, referred to as front required regenerative power) to be generated by the front travel motor 631 on the basis of the rotation transmitted from the front tire 24 to the front travel motor 631.

The electric power corresponding to the braking force to be applied to the rear tire 25 is electric power (hereinafter, referred to as rear required regenerative power) to be generated by the rear travel motor 632 on the basis of the rotation transmitted from the rear tire 25 to the rear travel motor 632.

Therefore, the required regenerative power P_{F} is the sum of the front required regenerative power and the rear required regenerative power. The front required regenerative power and the rear required regenerative power are obtained on the basis of the vehicle speed of the mobile crane 1 and the required braking force corresponding to the vehicle speed.

In the present embodiment, the control unit 65 stores a first table (not illustrated) associating the vehicle speed with the required braking force (hereinafter, referred to as front required braking force). The vehicle speed in the first table corresponds to the rotation speed of the front travel motor 631.

The control unit 65 stores a second table (not illustrated) associating the vehicle speed with the required braking force (hereinafter, referred to as rear required braking force). The vehicle speed in the second table corresponds to the rotation speed of the rear travel motor 632.

The control unit 65 acquires the front required braking force corresponding to the vehicle speed of the mobile crane 1 in the traveling state from the first table. Then, the control unit 65 calculates the front required regenerative power on the basis of the vehicle speed and the front required braking force acquired from the first table. As described above, the front required regenerative power varies according to the vehicle speed of the mobile crane 1 in the traveling state.

In addition, the control unit 65 acquires the rear required braking force corresponding to the vehicle speed of the mobile crane 1 in the traveling state from the second table. Then, the control unit 65 calculates the rear required regenerative power on the basis of the vehicle speed and the rear required braking force acquired from the second table. As described above, the rear required regenerative power varies according to the vehicle speed of the mobile crane 1 in the traveling state.

Next, in step S102 of Fig. 5, the control unit 65 calculates electric power P_{ePTO} (hereinafter, referred to as first power consumption P_{ePTO}) to be consumed in the hydraulic oil supply device 8.

The first power consumption P_{ePTO} is obtained by the following expression (1). P_{F} is the required regenerative power. P6₀ is chargeable power of the high-voltage battery 60. The chargeable power of the high-voltage battery 60 may be regarded as electric power acceptable to the high-voltage battery 60 at that time (that is, the time point at which processing of step S102 is performed).

P_{α} is electric power consumed in a device that operates on the basis of the electric power of the high-voltage battery 60 at that time. The chargeable power of the high-voltage battery 60 may be regarded as electric power acceptable to the high-voltage battery 60, which is determined according to the remaining battery level of the high-voltage battery 60. The chargeable power of the high-voltage battery 60 can also be regarded as electric power acceptable to the high-voltage battery 60, which is determined according to the temperature of the high-voltage battery 60.
[Mathematical Expression 1] ${P}_{ePTO} = {P}_{F} - {P}_{60} - {P}_{α}$ (1) Error! Reference is not found.

Next, in step S103 of Fig. 5, the control unit 65 determines whether the first power consumption P_{ePTO} calculated in step S102 is greater than zero.

When the first power consumption P_{ePTO} is greater than zero, the remaining amount of the high-voltage battery 60 is greater than a predetermined value, and the high-voltage battery 60 cannot be charged with all the required regenerative power. Contrarily, when the first power consumption P_{ePTO} is equal to or less than zero, the remaining amount of the high-voltage battery 60 is equal to or less than a predetermined value, and the high-voltage battery 60 can be charged with all the required regenerative power.

When the first power consumption P_{ePTO} is greater than zero ("YES" in step S 103), the control unit 65 advances the control processing to step S104. That is, in the present embodiment, when the remaining amount of the high-voltage battery 60 is larger than a predetermined value, the control processing proceeds to step S104.

As described above, in the present embodiment, the regenerative power generated by the travel motor 63 is distributed to the hydraulic oil supply device 8 according to the chargeable power of the high-voltage battery 60. Specifically, in the present embodiment, when the remaining amount of the high-voltage battery 60 is larger than a predetermined value, the regenerative power generated by the travel motor 63 is distributed to the hydraulic oil supply device 8 by the regenerative power compensation control.

Contrarily, when the first power consumption P_{ePTO} is smaller than zero ("NO" in step S 103), the control unit 65 ends the regenerative power compensation control. That is, the control unit 65 supplies the regenerative power generated by the travel motor 63 to the high-voltage battery 60 by the normal regenerative brake control.

Next, in step S104 of Fig. 5, the control unit 65 determines whether the temperature of the hydraulic oil is equal to or lower than a predetermined threshold. The predetermined threshold is, for example, 85°C. The predetermined threshold may be appropriately set according to the type of the hydraulic oil or the use environment.

When the temperature of the hydraulic oil is equal to or lower than the predetermined threshold ("YES" in step S 104), the control unit 65 advances the control processing to step S105.

When the temperature of the hydraulic oil is higher than the predetermined threshold ("NO" in step S104), the control unit 65 ends the regenerative power compensation control. When the temperature of the hydraulic oil is higher than the predetermined threshold, the control unit 65 ends the regenerative brake control.

Therefore, the braking force on the basis of the regenerative brake control is not generated. In this case, the driver applies a braking force to the mobile crane 1 by operating the foot brake, and decelerates the mobile crane 1. When ending the regenerative brake control, the control unit 65 may notify the driver of the end.

Alternatively, when the temperature of the hydraulic oil is higher than a predetermined threshold ("NO" in step S 104), the control unit 65 may control the cooling device 86 described below to cool the hydraulic oil in the tank 71. During this period, control unit 65 may repeat the operation in step S104.

As described above, in the present embodiment, the control unit 65 sets the temperature condition of the hydraulic oil as one of the conditions for starting the regenerative power compensation control. However, the condition for starting the regenerative power compensation control is not limited to the temperature condition of the hydraulic oil. The condition for starting the regenerative power compensation control may include various conditions according to the state of the mobile crane 1.

Next, in step S105 in Fig. 5, the control unit 65 performs pump capacity change processing. The pump capacity change processing is processing of switching the discharge capacity of the first pump 820 from the first discharge capacity to the second discharge capacity.

As described above, the first pump 820 has, as operation modes, a first mode in which the discharge capacity is the first discharge capacity and a second mode in which the discharge capacity is the second discharge capacity. The discharge capacity of the first pump 820 in the first mode is smaller than the discharge capacity of the first pump 820 in the second mode.

In a state where the normal regenerative brake control is performed in the traveling state of the mobile crane 1, the first pump 820 is driven in the first mode. Therefore, electric power consumed in the first pump 820 (in other words, the hydraulic oil supply device 8) is relatively small. Such a configuration contributes to energy saving.

In contrast, when the regenerative power compensation control is performed in the traveling state of the mobile crane 1, it is desirable that the electric power consumed by the hydraulic oil supply device 8 be large. Therefore, in step S105, the control unit 65 increases the discharge amount of the first pump 820 by switching the mode of the first pump 820 from the first mode to the second mode. When the discharge amount of the first pump 820 increases, the electric power consumed by the hydraulic oil supply device 8 increases.

Next, in step S106 in Fig. 5, the control unit 65 performs return circuit switching processing. The return circuit switching processing is a processing of switching a return circuit through which the hydraulic oil discharged from the first pump 820 passes when returning to the tank 71.

In the traveling state of the mobile crane 1, the hydraulic oil discharged from the first pump 820 is not supplied to the upper first hydraulic device 730, but returns to the tank 71 through the return circuit 85 (see Fig. 2). The first pump 820 is constantly driven in the traveling state of the mobile crane 1.

The return circuit 85 includes a low load return circuit 851 and a high load return circuit 852. The return circuit 85 (the low load return circuit 851 and the high load return circuit 852) may be regarded as an element of the hydraulic oil supply device 8.

The low load return circuit 851 has a relatively low load pressure in the circuit. That is, in a state where the hydraulic oil discharged from the first pump 820 is supplied to the low load return circuit 851, the load torque acting on the first pump 820 (in other words, the electric motor 80) is small.

A state in which the hydraulic oil discharged from the first pump 820 returns to the tank 71 through the low load return circuit 851 is referred to as a low load return state (in other words, the unload state) of the first pump 820. In the low load return state, since the load torque acting on the first pump 820 (in other words, the electric motor 80) is small, the electric power consumed in the hydraulic oil supply device 8 is small.

In contrast, the high load return circuit 852 includes a pressure regulating valve 852a. The pressure regulating valve 852a is, for example, a relief valve. In such a high load return circuit 852, the load pressure in the circuit is higher than the load pressure of the low load return circuit 851.

That is, in a state where the hydraulic oil discharged from the first pump 820 is supplied to the high load return circuit 852, the load torque acting on the first pump 820 (in other words, the electric motor 80) is large.

A state in which the hydraulic oil discharged from the first pump 820 returns to the tank 71 through the high load return circuit 852 is referred to as a high load return state of the first pump 820. In the high load return state, since the load torque acting on the first pump 820 (in other words, the electric motor 80) is large, the electric power consumed in the hydraulic oil supply device 8 is large.

In the present embodiment, in a state where the normal regenerative brake control is performed in the traveling state of the mobile crane 1, the hydraulic oil discharged from the first pump 820 returns to the tank 71 through the low load return circuit 851.

That is, in the state where the normal regenerative brake control is performed in the traveling state of the mobile crane 1, the first pump 820 is in the low load return state. As described above, the low load return circuit 851 has a relatively low load pressure within the circuit. Therefore, the electric power consumed in the hydraulic oil supply device 8 is small. Such a configuration contributes to energy saving.

In contrast, when the regenerative power compensation control is performed in the traveling state of the mobile crane 1, it is desirable that the electric power consumed by the hydraulic oil supply device 8 be large. Therefore, in step S106, the control unit 65 switches the return circuit through which the hydraulic oil discharged from the first pump 820 passes when returning to the tank 71 from the low load return circuit 851 to the high load return circuit 852.

As described above, the load pressure in the high load return circuit 852 is higher than the load pressure of the low load return circuit 851. Therefore, in a state where the hydraulic oil discharged from the first pump 820 is supplied to the high load return circuit 852, the load torque acting on the first pump 820 (in other words, the electric motor 80) is large. Therefore, the electric power consumed in the hydraulic oil supply device 8 is also large.

As described above, in the present embodiment, the control unit 65 increases the electric power consumed in the hydraulic oil supply device 8 in two stages by performing the pump capacity change processing in step S105 and the return circuit switching processing in step S106.

The pump capacity change processing and/or the return circuit switching processing may be omitted depending on the amount of electric power to be consumed by the hydraulic oil supply device 8.

Next, in step S107 in Fig. 5, the control unit 65 performs a rotation speed change processing. The rotation speed change processing is processing of changing the rotation speed of the first pump 820 (in other words, the electric motor 80).

In other words, the rotation speed change processing is processing of changing the rotation speed of the first pump 820 (in other words, the electric motor 80) according to the remaining battery level to change the electric power consumed by the hydraulic oil supply device 8.

In the rotation speed change processing, the control unit 65 increases the rotation speed of the first pump 820 (in other words, the electric motor 80) as the remaining battery level increases, thereby increasing the electric power that can be consumed by the hydraulic oil supply device 8.

Specifically, the control unit 65 sets the rotation speed of the first pump 820 to the rotation speed N_{ePTO} (hereinafter, referred to as a first rotation speed N_{ePTO}) corresponding to the first power consumption P_{ePTO} calculated in step S104.

The first rotation speed N_{ePTO} is obtained by the following expression (2). P_{ePTO} is the first power consumption calculated in step S104. E₈₀ is the motor efficiency of the electric motor 80. The motor efficiency of the electric motor 80 is a value set in advance according to the electric motor 80. T₈₀ is a motor shaft torque of the electric motor 80. The motor shaft torque of the electric motor 80 is a value set in advance according to the load torque acting on the first pump 820 and the reduction ratio of the speed reducer 81 (see Fig. 2).
[Mathematical Expression 2] ${N}_{ePTO} = {P}_{ePTO} \div {E}_{80} \div {T}_{80}$ (2)

The control unit 65 then drives the first pump 820 at the first rotation speed N_{ePTO}.

As described above, the control unit 65 sets the first rotation speed N_{ePTO} according to the first power consumption P_{ePTO} calculated in step S104 as the rotation speed of the first pump 820. That is, the first power consumption P_{ePTO} is a value according to the remaining battery level of the high-voltage battery 60. As shown in the above expression (2), the first rotation speed N_{ePTO} is set on the basis of the first power consumption P_{ePTO}. In other words, the first rotation speed N_{ePTO} is set on the basis of the remaining battery level of the high-voltage battery 60.

As a result of the rotation speed change processing described above, regenerative power corresponding to the first power consumption P_{ePTO} out of the regenerative power generated by the travel motor 63 is distributed to the hydraulic oil supply device 8. Then, in the hydraulic oil supply device 8, electric power (that is, the first power consumption P_{ePTO}) according to the remaining battery level is consumed. The regenerative power generated by the travel motor 63 is equal to the required regenerative power P_{F} calculated by the control unit 65 in step S101.

In addition, even when the remaining battery level of the high-voltage battery 60 is larger than a predetermined value, the high-voltage battery 60 may be able to receive a certain amount of regenerative power. In this case, out of the regenerative power generated by the travel motor 63, the electric power that can be received by the high-voltage battery 60 is distributed to the high-voltage battery 60.

Contrarily, out of the regenerative power generated by the travel motor 63, the electric power that cannot be received by the high-voltage battery 60 is distributed to the hydraulic oil supply device 8 as described above. The electric power that cannot be received by the high-voltage battery 60 is the electric power P_{ePTO} calculated by the control unit 65 in step S102.

The smaller the remaining battery level of the high-voltage battery 60, the larger the regenerative power that can be received by the high-voltage battery 60. Therefore, the smaller the remaining battery level of the high-voltage battery 60, the smaller the regenerative power distributed to the hydraulic oil supply device 8.

Contrarily, the larger the remaining battery level of the high-voltage battery 60, the smaller the regenerative power that can be received by the high-voltage battery 60. Therefore, the larger the remaining battery level of the high-voltage battery 60, the larger the regenerative power distributed to the hydraulic oil supply device 8.

The regenerative power distributed to the hydraulic oil supply device 8 is consumed in the hydraulic oil supply device 8 as described above. Specifically, the regenerative power supplied to the hydraulic oil supply device 8 flows into the electric motor 80 through the inverter 83. Then, the electric motor 80 is driven.

When the electric motor 80 is driven, the first pump 820 is driven via the speed reducer 81, and the hydraulic oil is discharged from the first pump 820. In the present embodiment, in the traveling state of the mobile crane 1, the hydraulic oil discharged from the first pump 820 is not supplied to the upper first hydraulic device 730, and returns to the tank 71 through the high load return circuit 852.

At this time, the regenerative power supplied to the hydraulic oil supply device 8 is converted into kinetic energy of the first pump 820. Then, kinetic energy of the first pump 820 is converted into kinetic energy of hydraulic oil discharged from the first pump 820.

Furthermore, kinetic energy of the hydraulic oil is converted to thermal energy in the high load return circuit 852. That is, the regenerative power distributed to the hydraulic oil supply device 8 is consumed mainly by being converted into thermal energy in the high load return circuit 852.

In the present embodiment, the mode of the first pump 820 is changed so that the load torque acting on the first pump 820 increases in the pump capacity change processing of step S105.

In addition, in the return circuit switching processing of step S106, a return circuit through which the hydraulic oil discharged from the first pump 820 passes when returning to the tank 71 is set in the high load return circuit 852 so that the load torque acting on the first pump 820 increases.

Furthermore, in the rotation speed change processing in step S107, the rotation speed of the first pump 820 is set to the first rotation speed N_{ePTO} corresponding to the first power consumption P_{ePTO} calculated in step S104.

Therefore, the regenerative power supplied to the hydraulic oil supply device 8 can be consumed in the hydraulic oil supply device 8.

The hydraulic oil supply device 8 may include a cooling device 86 that cools the hydraulic oil. The cooling device 86 cools the hydraulic oil in the tank 71 when the temperature of the hydraulic oil exceeds a predetermined temperature in the traveling state of the mobile crane 1. The position of the cooling device 86 is not particularly limited. The cooling device 86 may be disposed at a position where the hydraulic oil can be cooled.

### (Functions and Effects of Present Embodiment)

According to the mobile crane 1 of the present embodiment having the above-described configuration, it is possible to provide a crane that can travel by electric power.

In particular, according to the mobile crane 1 of the present embodiment, it is possible to perform appropriate regenerative brake control according to the remaining battery level of the high-voltage battery 60.

Specifically, in the regenerative brake control, when the remaining battery level of the high-voltage battery 60 is larger than a predetermined value, the control unit 65 distributes the regenerative power generated by the travel motor 63 to the hydraulic oil supply device 8. Therefore, even when the remaining battery level of the high-voltage battery 60 is high, the regenerative brake control can be performed.

In addition, the control unit 65 changes the electric power consumed by the hydraulic oil supply device according to the remaining battery level of the high-voltage battery 60. Therefore, out of the regenerative power generated by the travel motor 63, the regenerative power supplied to the hydraulic oil supply device 8 can be reliably consumed in the hydraulic oil supply device 8. As a result, the regenerative brake control can be stably performed regardless of the remaining battery level of the high-voltage battery 60.

Out of the regenerative power generated by the travel motor 63, the regenerative power supplied to the hydraulic oil supply device 8 is converted into thermal energy of the hydraulic oil of the hydraulic oil supply device 8 and consumed. The mobile crane 1 includes many hydraulic devices to be used at the time of crane operation. Therefore, the mobile crane 1 has a large amount of hydraulic oil. Therefore, the hydraulic oil can receive a large amount of thermal energy. That is, the hydraulic oil supply device 8 can receive a large amount of regenerative power in the regenerative power compensation control. In addition, functions and effects exhibited by the mobile crane 1 according to the present embodiment are as described above.

### (Supplementary Notes)

In the regenerative brake control, the crane according to the present invention including the above-described embodiment performs the regenerative power compensation control of distributing the regenerative power generated by the travel motor 63 to the hydraulic oil supply device 8 according to the chargeable power of the power supply unit (specifically, high-voltage battery 60) and changing the electric power to be consumed by the hydraulic oil supply device 8.

In the above-described embodiment, the example has been described in which the regenerative power compensation control is performed on the basis of the remaining battery level of the high-voltage battery 60. In such an embodiment, the chargeable power of the high-voltage battery 60 is the electric power acceptable to the high-voltage battery 60, which is determined according to the remaining battery level of the high-voltage battery 60.

However, the crane according to the present invention may perform the regenerative power compensation control on the basis of the temperature of the power supply unit (specifically, high-voltage battery 60). Specifically, in the regenerative brake control, when the temperature of the high-voltage battery 60 satisfies a predetermined condition, the crane may distribute the regenerative power generated by the travel motor 63 to the hydraulic oil supply device 8 and change the electric power to be consumed by the hydraulic oil supply device 8.

In this case, the chargeable power of the high-voltage battery 60 is electric power acceptable to the high-voltage battery 60, which is determined according to the temperature of the high-voltage battery 60.

The case where the temperature of the high-voltage battery 60 satisfies the predetermined condition is, for example, a case where the temperature of the high-voltage battery 60 is equal to or lower than the first predetermined temperature. When the temperature of the high-voltage battery 60 is lower than the first predetermined temperature, the chargeable power of the high-voltage battery 60 decreases. In such a situation, when the regenerative power compensation control is performed, part of the regenerative power generated by the travel motor 63 can be consumed in the hydraulic oil supply device 8.

The case where the temperature of the high-voltage battery 60 satisfies the predetermined condition is, for example, a case where the temperature of the high-voltage battery 60 is equal to or higher than the second predetermined temperature. When the temperature of the high-voltage battery 60 is equal to or higher than the second predetermined temperature, the chargeable power of the high-voltage battery 60 decreases. In such a situation, when the regenerative power compensation control is performed, part of the regenerative power generated by the travel motor 63 can be consumed in the hydraulic oil supply device 8.

This application is based upon and claims the benefit of priority from Japanese Patent Application No. 2023-203954, filed on December 1, 2023, the entire contents of which are incorporated herein by reference.

### Industrial Applicability

A crane according to the present invention is not limited to a rough terrain crane and thus may be any type of mobile crane, such as an all-terrain crane, a truck crane, or a loading truck crane (also, referred to as a cargo crane).

### Reference Signs List

- 1: mobile crane
- 2: lower traveling body
- 20: frame
- 200: transmission member arrangement space
- 201: battery housing space
- 202: front outrigger support
- 203: rear outrigger support
- 21: body
- 22: front axle
- 23: rear axle
- 24: front tire
- 25: rear tire
- 26: outrigger
- 26a: front outrigger
- 26b: rear outrigger
- 3: upper turning body
- 31: turning base
- 32: telescopic boom
- 33: cab
- 34: derricking cylinder
- 35: telescopic cylinder
- 36: wire rope
- 37: hook
- 38: winch
- 4: transmission member
- 5: low-voltage system
- 50: lower controller
- 51: upper controller
- 53: low-voltage battery
- 6: high-voltage system
- 60: high-voltage battery
- 601a, 601b: battery
- 63: travel motor
- 631: front travel motor
- 632: rear travel motor
- 64: upper electric device
- 65: control unit
- 7: hydraulic system
- 71: tank
- 72: lower hydraulic device
- 73: upper hydraulic device
- 730: upper first hydraulic device
- 731: upper second hydraulic device
- 8: hydraulic oil supply device
- 80: electric motor
- 81: speed reducer
- 82: pump
- 820: first pump
- 821: second pump
- 83: inverter
- 85: return circuit
- 851: low load return circuit
- 852: high load return circuit
- 852a: pressure regulating valve
- 86: cooling device
- 88a, 88b, 88c: discharge hose

## Claims

1. A crane comprising:
a traveling vehicle body including a travel motor driven by a power supply unit;
a hydraulic oil supply device that is driven by the power supply unit and supplies hydraulic oil to a driven unit; and
a regenerative brake device that performs regenerative brake control in which regenerative power generated by the travel motor is supplied to the power supply unit to generate a braking force when the traveling vehicle body decelerates, wherein
the regenerative brake device distributes the regenerative power to the hydraulic oil supply device and changes electric power to be consumed by the hydraulic oil supply device according to chargeable power of the power supply unit in the regenerative brake control.

2. The crane according to claim 1, wherein
the chargeable power is electric power acceptable to the power supply unit, the electric power being determined according to a remaining battery level of the power supply unit, and
in the regenerative brake control, when the remaining battery level of the power supply unit is larger than a predetermined value, the regenerative brake device distributes the regenerative power to the hydraulic oil supply device and changes electric power to be consumed by the hydraulic oil supply device according to the remaining battery level.

3. The crane according to claim 1, wherein
the chargeable power is electric power acceptable to the power supply unit, the electric power being determined according to a temperature of the power supply unit, and
the regenerative brake device distributes the regenerative power to the hydraulic oil supply device and changes electric power to be consumed by the hydraulic oil supply device when a temperature of the power supply unit satisfies a predetermined condition in the regenerative brake control.

4. The crane according to claim 2, wherein
the hydraulic oil supply device includes:
a pump motor driven by the power supply unit; and
a first pump unit driven by the pump motor, and
the regenerative brake device changes electric power to be consumed by the hydraulic oil supply device by changing a rotation speed of the pump motor according to the remaining battery level.

5. The crane according to claim 4, wherein
the regenerative brake device increases a rotation speed of the pump motor to increase electric power that can be consumed by the hydraulic oil supply device as the remaining battery level increases.

6. The crane according to claim 4, wherein
the regenerative brake device switches discharge capacity of the first pump unit from a minimum to a maximum when distributing the regenerative power to the hydraulic oil supply device.

7. The crane according to claim 4, wherein
when distributing the regenerative power to the hydraulic oil supply device, the regenerative brake device switches a hydraulic circuit through which the hydraulic oil passes from a hydraulic circuit in which a load torque acting on the first pump unit is low to a hydraulic circuit in which the load torque is high.

8. The crane according to claim 4, wherein
the hydraulic oil supply device
constantly drives the first pump unit in a crane operation state to supply the hydraulic oil to the driven unit, and
constantly drives the first pump unit in a traveling state to return hydraulic oil to a hydraulic oil tank without supplying hydraulic oil to the driven unit.

9. The crane according to claim 1,
further comprising a cooling device that cools the hydraulic oil when a temperature of the hydraulic oil exceeds a predetermined temperature in a traveling state.
